# FASCICULE DE BREVET EUROPEEN

(11) **EP 2 541 855 B1**
(45) Date de publication et mention de la délivrance du brevet: **02.05.2018**
(21) Numéro de dépôt: 12174145.8
(22) Date de dépôt: 28.06.2012
(51) Int. Cl.: H04L 12/751, H04B 7/185

(54) **Système de télécommunication comprenant un routeur IP central composé d'un satellite et d'un routeur sol**
Telekommunikationssystem mit einem zentralen IP-Router, der aus einem Satelliten und einem Bodenrouter besteht
Telecommunications system comprising a central IP router made up of a satellite and a ground router

(30) Priorité: 30.06.2011 FR 1102034
(43) Date de publication de la demande: 02.01.2013
(73) Titulaire: Thales, 92200 Neuilly Sur Seine (FR); Centre National d'Etudes Spatiales, 75039 Paris Cedex 01 (FR)
(72) Inventeur: Hobaya, Fabrice, 31170 Tournefeuille (FR); Baudoin, Cédric, 31400 Toulouse (FR); Chaput, Emmanuel, 31140 Launaguet (FR); Gelard, Patrick, 31320 Castanet (FR)
(74) Mandataire: Brunelli, Gérald

(56) Documents cités:
- WOOD L ET AL: "IP routing issues in satellite constellation networks", INTERNATIONAL JOURNAL OF SATELLITE COMMUNICATIONS, JOHN WILEY AND SONS, US, vol. 18, no. 6, 1 décembre 2000 (2000-12-01), pages 1-18, XP002336261, ISSN: 0737-2884, DOI: 10.1002/(SICI)1099-1247(200001/02)18:1<1:: AID-SAT648>3.0.CO;2-G
- THOMAS R HENDERSON ED - PROAKIS ET AL: "LEO Satellite Networks", 15 avril 2003 (2003-04-15), ENCYCLOPEDIA OF TELECOMMUNICATIONS, WILEY, US, PAGE(S) 1247 - 1256, XP008160778, * voir section 4.2 *
- HOGIE K ET AL: "Using standard Internet Protocols and applications in space", COMPUTER NETWORKS, ELSEVIER SCIENCE PUBLISHERS B.V., AMSTERDAM, NL, vol. 47, no. 5, 5 avril 2005 (2005-04-05), pages 603-650, XP027706964, ISSN: 1389-1286 [extrait le 2005-04-05]

## Description

L'invention concerne un système de télécommunication comprenant un routeur IP central composé d'un satellite jouant le rôle de commutateur IP et d'un routeur sol permettant de réaliser les autres fonctions de routage. Elle s'applique notamment aux domaines des communications satellitaires.

Il existe aujourd'hui des systèmes de télécommunication par satellites composés d'un ou plusieurs satellites comprenant un routeur IP embarqué et permettant à des terminaux de communiquer entre eux sans passer par un relais terrestre.

Dans cette description, un terminal désigne tout équipement comportant des moyens pour recevoir et émettre des données en provenance d'un autre équipement via un ou plusieurs satellites appartenant au système. Ainsi un terminal peut être un serveur, un ordinateur portable, un aéronef ou tout type d'équipement répondant à cette définition.

Un routeur IP embarqué à bord d'un satellite permet d'obtenir une flexibilité en termes de plan d'adressage IP. De plus, la complexité des terminaux du système communiquant avec ledit satellite est réduite. En outre, le phénomène de double bon est évité pour effectuer le routage IP car un terminal intermédiaire, jouant le rôle de passerelle n'est pas requis. De plus, le volume de signalisation de routage généré sur le segment satellite est réduit ainsi que le temps de convergence des tables de routage des terminaux du système.

Les traitements et calculs effectués par le satellite sont mis en oeuvre par au moins une unité de traitement embarquée désignée habituellement par l'acronyme OBP venant de l'expression anglo-saxonne « On Board Processor ». Les systèmes existants utilisant un routeur IP embarqué nécessitent un OBP de niveau 3. Dans la description, les niveaux 2 et 3 font référence aux niveaux du modèle de référence OSI, acronyme venant de l'expression anglo-saxonne « Open Systems Interconnection ».

L'article de Wood L. et al, intitulé « IP routing issues in satellite constellation networks », International Journal of satellite communications, John Wiley and Sons, US, vol.18, n°6, l'article de Thomas R. Henderson intitulé « LEO Satellite Networks », 15 avril 2003, Encyclopédia of Telecommunications, Wiley, US, pages 1247-1256, et l'article de Hogie K. et al., intitulé « Using standard Internet Protocols and applications in space », Computer Networks, Elsevier Science Publishers B.V., Amsterdam, NL, vol.47 , n°.5, 5 avril 2005, pages 603-650, décrivent des systèmes de télécommunications utilisant des constellation de satellites dans lesquels les satellite sont pourvus de traitement bord OBP et de liaisons inter-satellites ISLs leur permettant de mettre en oeuvre un routage de paquets IP.

Un exemple de système comprenant un routeur IP embarqué dans un satellite est le système CLEO, acronyme venant de l'expression anglo-saxonne « Cisco router in Low Earth Orbit ». Ce système d'expérimentation embarque un routeur IP classique sur une charge utile secondaire d'un satellite défilant. Un autre système désigné par l'acronyme IRIS venant de l'expression anglo-saxonne « Internet Routing in Space Router » a ensuite été mis en oeuvre, ledit système permettant d'interconnecter des terminaux via un routeur IP embarqué dans un satellite géostationnaire Intelsat IS-14. Ce routeur a les mêmes fonctionnalités et les mêmes capacités qu'un routeur IP terrestre mais il peut être embarqué à bord du satellite.

Un inconvénient de ce type de système est qu'un routeur IP embarqué dans un satellite est difficilement réalisable en pratique. En effet, d'importantes ressources matérielles sont requises, notamment en termes de mémoires et de puissance de calcul. Or, la charge utile embarquée dans un satellite est limitée. En conséquence, les solutions existantes ne peuvent supporter que des débits limités.

Un but de l'invention est notamment de pallier les inconvénients précités.

A cet effet l'invention a pour objet un système de télécommunication comprenant au moins un routeur central, un terminal source et un terminal destination. Le terminal source comprend des moyens pour transmettre via le routeur central des paquets IP fragmentés en au moins un fragment de niveau 2 vers le terminal de destination auquel est alloué une adresse IP de destination. Ledit routeur central est composé d'un satellite et d'un routeur sol, ledit satellite comportant des moyens pour mettre en oeuvre une commutation des paquets IP sans réassembler les fragments de niveau 2 émis par le terminal source vers le terminal de destination. Les fragments comprennent une référence à l'adresse IP de destination utilisée comme base pour la commutation. Le routeur sol comprend des moyens pour déterminer des paramètres de routage IP utiles pour mettre en oeuvre la commutation IP, lesdits paramètres étant transmis par le routeur sol au satellite pour configurer la manière dont la commutation est réalisée par ledit satellite.

La référence à l'adresse IP de destination est l'adresse IP de destination elle-même.

Dans un mode de réalisation, la référence à l'adresse IP de destination est un label de référence.

Selon un aspect de l'invention, le label de référence est ajouté à l'en-tête des fragments de niveau 2 par le terminal source.

Selon un autre aspect de l'invention, la taille du premier fragment de niveau 2 d'un paquet IP après fragmentation est au moins égale à la taille l'en-tête de niveau 2 additionnée à la taille de l'en-tête IP.

Le satellite enregistre par exemple l'association entre le label de commutation IP et l'adresse IP de destination au passage du premier fragment de niveau 2 d'un paquet IP.

La taille du label de commutation IP est par exemple de 1 octet.

Un label de commutation IP correspond par exemple à une variable locale propre à chaque terminal.

Selon un aspect de l'invention, les informations relatives au routage IP et à la commutation IP sont stockées dans le routeur sol sous forme de tables.

Le satellite peut comprendre une table de routage du satellite, ladite table contenant l'adresse IP destination, un masque lorsqu'il s'agit d'une adresse réseau, le numéro du port de sortie associé et l'adresse de niveau 2 d'une passerelle.

Dans un mode de réalisation, le satellite décrémente le champ TTL de l'en-tête IP lors du passage du premier fragment de niveau 2.

Les technologies DVB-S2 et DVB-RCS2 peuvent être utilisées dans le cadre de l'invention.

L'invention a aussi pour objet un satellite de communication comportant des moyens pour mettre en oeuvre une commutation de paquets IP sans réassembler les fragments de niveau 2 émis par un terminal source vers un terminal de destination, lesdits fragments comprenant une référence à l'adresse IP de destination utilisée comme base pour la commutation.

L'invention a aussi pour objet un routeur sol comprenant des moyens pour déterminer des paramètres de routage de paquets IP, lesdits paramètres étant transmis par le routeur sol au satellite réalisant la commutation de paquet IP.

D'autres caractéristiques et avantages de l'invention apparaîtront à l'aide de la description qui suit donnée à titre illustratif et non limitatif, faite en regard des dessins annexés parmi lesquels :
- la figure 1 présente une architecture haut niveau du système selon l'invention ;
- la figure 2 donne un exemple de routeur central selon l'invention ;
- la figure 3 donne un exemple d'architecture protocolaire de plan de contrôle pour un système par satellite utilisant les technologies DVB-S2 et DVB-RCS2 ;
- la figure 4 donne un exemple d'architecture protocolaire de plan de données pour un système par satellite utilisant les technologies DVB-S2 et DVB-RCS2 ;
- la figure 5 donne un exemple d'architecture protocolaire de plan de gestion pour un système par satellite utilisant les technologies DVB-S2 et DVB-RCS2.

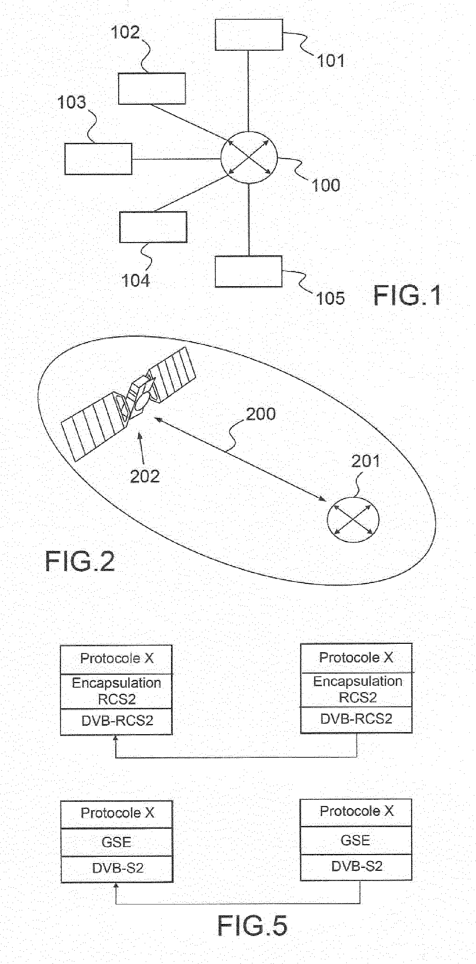

La figure 1 présente une architecture haut niveau du système selon l'invention.

Le système selon l'invention est un système permettant de faire communiquer les uns avec les autres une pluralité de terminaux et de serveurs 101, 102, 103, 104, 105 par l'intermédiaire d'au moins un satellite de communications. Le principe de l'invention est que le satellite émule un routeur IP. En d'autres termes, le satellite est perçu par les terminaux du système comme un routeur IP alors que celui-ci ne met pas en oeuvre toutes les fonctionnalités d'un routeur IP traditionnel.

Cette émulation est rendue possible notamment en séparant les fonctions de commutation IP et de routage IP. L'architecture du système est basée sur un routeur central 100 scindé en deux entités permettant l'émulation du routeur IP.

La première entité met en oeuvre la commutation IP et est implémentée au niveau du satellite. Cela permet d'éviter le transite des données par le sol lors du transfert de paquets d'un terminal à l'autre via le satellite. Le phénomène de double bond est alors évité. La première entité correspond donc à un OBP de niveau 2 inclus dans le satellite avec une fonction de commutation IP.

La seconde entité met en oeuvre le routage IP, c'est-à-dire la gestion de la signalisation de routage et le calcul des routes. Elle est située par exemple dans une station au sol ce qui permet de réduire les ressources nécessaires embarquées dans les satellites.

Cette séparation du routeur IP en deux entités fonctionnelles réparties respectivement dans le satellite et dans un routeur sol permet en outre de réaliser la commutation IP à bord du satellite sans réassembler les paquets IP. Pour cela, un label de référence à l'adresse IP destination est ajouté à chaque fragment du paquet de niveau 2.

Avantageusement, le système selon l'invention permet d'offrir des fonctionnalités identiques à celles d'un routeur IP embarqué, les terminaux au sol se comportant comme s'ils étaient connectés à un routeur IP embarqué. La complexité des calculs à réaliser à bord du satellite ainsi que les ressources mémoires nécessaires sont réduites ce qui permet à ressources constantes d'augmenter les débits supportés par rapport aux systèmes existants.

La figure 2 donne un exemple de routeur central selon l'invention. De par la séparation en deux entités physiques du routeur central, des échanges 200 auront donc lieu entre le routeur sol 201 et le satellite 202. Après avoir calculé la table de routage, le routeur sol 201 enverra les informations nécessaires au satellite 202 pour que celui-ci puisse faire la commutation IP. Le routeur sol 201 peut être localisé dans une station terrestre fixe, mobile ou bien dans un aéronef, le terme 'sol' étant utilisé pour signifier que ledit routeur est implémenté dans un équipement distinct du satellite.

Cette architecture du routeur IP central permet donc d'alléger la charge utile du satellite en comparaison à un OBP de niveau 3 mettant en oeuvre l'ensemble des fonctions d'un routeur IP. Les ressources bords nécessaires sont alors réduites de manière significative.

Le système selon l'invention doit gérer la transmission de signalisation ainsi que la transmission de données. Afin de décrire plus précisément l'invention, les principes des plan de contrôle et des plans de données nécessaires à la mise en oeuvre de l'invention sont présentés. De plus, des exemples d'architecture protocolaire se basant sur les systèmes DVB-S2 et DVB-RCS2 sont présentés. Il est à noter que l'invention peut être mise en oeuvre sur la base d'autres technologies satellitaires.

Le plan de contrôle a notamment pour objectif de mettre en oeuvre le protocole de routage ainsi que l'annonce des routes. Les entités impliquées dans le protocole de routage sont décrites ci-après.

Les terminaux et le routeur sol implantent un protocole de routage interne IGP, acronyme venant de l'expression anglo-saxonne « Interior Gateway Protocol ». Un protocole de routage externe EGP, acronyme venant de l'expression anglo-saxonne « Exterior Gateway Protocol », peut aussi être utilisé. Comme mentionné précédemment, un satellite du système selon l'invention n'implante pas de protocole de routage. Cela permet de réduire la complexité de la charge utile du satellite. Différents protocoles de routage peuvent être utilisés dans le cadre de l'invention, comme par exemple le protocole RIP, acronyme venant de l'expression anglo-saxonne « Routing Information Protocol », le protocole OSPF, acronyme venant de l'expression anglo-saxonne «Open Short Path First » ou le protocole BGP, acronyme venant de l'expression anglo-saxonne « Border Gateway Protocol ».

Pour ce qui est des annonces de routes depuis les terminaux vers le routeur central, les terminaux annoncent des routes vers le routeur central comme si il s'agissait d'une seule et même entité. Dans la réalité, le satellite 202 va simplement commuter les annonces de route vers le routeur sol 201, et ce sans les interpréter.

Par ailleurs, le routeur sol calcule la table de routage et configure le satellite. Le routeur sol intègre alors toutes les informations de routage qui lui sont transmises et calcul la table de routage qui en découle. C'est ensuite le routeur sol qui configure le satellite pour qu'il puisse faire la commutation IP. Pour cela, le routeur sol va fournir des informations de commutation de niveau IP au satellite, c'est-à-dire les informations contenues dans la table de routage calculée par le routeur sol.

Pour ce qui est de l'annonce des routes depuis le routeur central vers les terminaux, le routeur sol envoi des informations de routage aux terminaux, qui reçoivent ces informations comme si elles provenaient d'un routeur IP embarqué sur le satellite. Les terminaux mettent alors à jour leur table de routage en fonction des informations qui leur arrivent sur l'interface air.

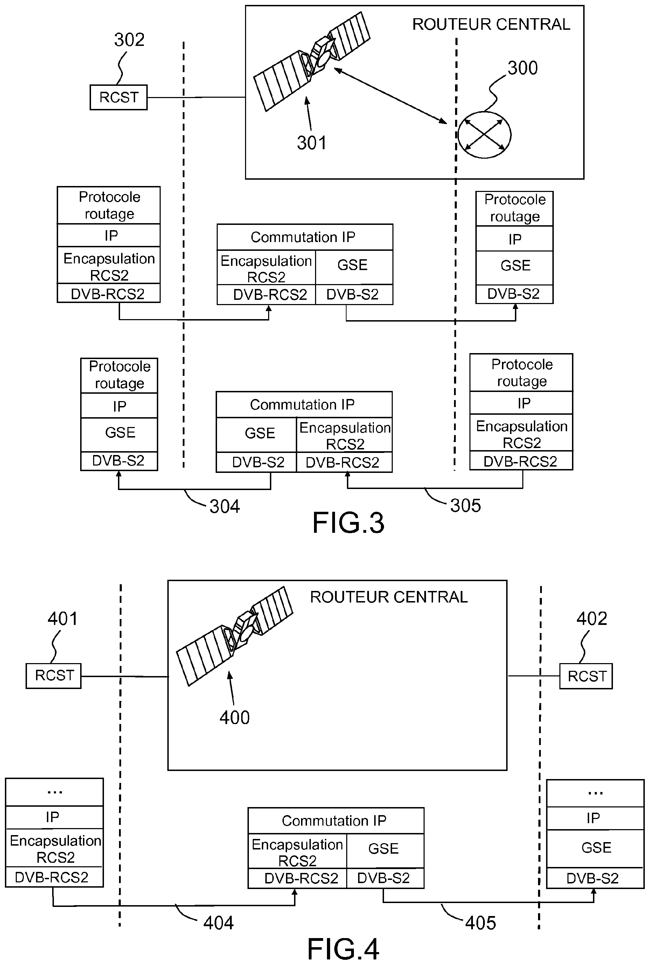

La figure 3 donne un exemple d'architecture protocolaire de plan de contrôle pour un système par satellite utilisant les technologies DVB-S2 et DVB-RCS2. En effet, le système selon l'invention peut être mis en oeuvre en utilisant les normes de communications satellitaire DVB-S2 pour la diffusion et DVB-RCS2 pour la voie de retour. Cependant, l'invention ne se limite pas à ces normes et peut être mise en oeuvre en utilisant d'autres technologies satellitaires, se basant sur des satellites géostationnaires ou non.

Dans cet exemple d'architecture de plan de contrôle, seule la signalisation de routage est considérée. Pour la signalisation du routage, sont directement impliqués les terminaux 302 désignés par l'acronyme RCST venant de l'expression anglo-saxonne « Return Channel Satellite Terminal » et le routeur sol 300 qui émettent et reçoivent des informations de routage.

Le lien radio descendant 304 s'appuie sur une couche physique DVB-S2 et le lien radio montant sur une couche physique DVB-RCS2. La couche liaison de données s'appuie par exemple sur le protocole d'encapsulation du DVB-RCS2 et sur le protocole GSE, acronyme venant de l'expression anglo-saxonne « Generic Stream Encapsulation ». Le protocole d'encapsulation du DVB-RCS2 est utilisé pour les liens montants. Le protocole GSE est utilisé pour les liens descendants.

La commutation IP est mise en oeuvre au niveau du satellite. Le protocole de routage utilisé est mis en oeuvre à la fois au niveau du routeur sol 300 et des terminaux RCST. Cet exemple architecture est indépendante du protocole de routage choisie.

Le satellite 300 est indirectement impliqué en tant qu'élément de niveau 2 reliant les terminaux au routeur sol. En effet les informations de routage traversent le satellite, mais ce dernier n'émet et ne gère aucune information de routage.

Pour ce qui du plan de données, la commutation IP est réalisée à bord du satellite sans réassemblage des paquets IP.

L'objectif est donc de réaliser la commutation sur l'adresse IP destination sans réassembler le paquet. Pour cela, des labels au niveau 2 font référence à l'adresse de destination de niveau 3, c'est-à-dire l'adresse IP destination. Les ressources bords nécessaires en termes de mémoire et de calcul sont alors réduites. En effet, la mémorisation des fragments de tous les paquets IP en cours de commutation demande d'importantes ressources mémoire. De plus le réassemblage et la re-fragmentation de ces paquets IP demande des ressources de calcul importantes. Effectuer ces opérations dans une station terrestre n'est pas problématique car les ressources mémoires et les ressources de calcul sont moins contraintes que dans un satellite. De plus, contrairement aux réseaux terrestres où la fragmentation des paquets IP est quasiment inexistante, cette fragmentation est quasiment systématique dans le contexte satellitaire car les petites tailles des PDU de niveau 2 ne permettent pas le transport de paquets IP sans fragmentation, l'acronyme PDU venant de l'expression anglo-saxone « Protocol Data Unit ».

La figure 4 donne un exemple d'architecture protocolaire de plan de données pour un système par satellite utilisant les technologies DVB-S2 et DVB-RCS2.

Dans le plan de données, les terminaux 401, 402 et le satellite 400 sont impliqués mais pas le routeur sol, lesdites données ne passant pas par le routeur sol. Ainsi, le routeur sol n'est pas représenté sur la figure.

Pour pouvoir réaliser la commutation IP sans réassemblage des paquets IP, il faut que l'adresse IP de destination ou au moins une référence à celle-ci soit présente dans chaque fragment de niveau 2.

Afin de ne pas avoir une taille d'en-tête trop importante par rapport à la taille des données contenue dans un paquet, on choisira d'utiliser un label de taille relativement faible dans chaque fragment de niveau 2, ledit label étant utilisé pour faire référence à l'adresse IP de destination. En effet, si l'adresse IP était utilisée directement, il faudrait prévoir 4 octets dans le cas IPv4 et 16 octets dans le cas IPv6 pour chaque fragment de niveau 2. Il est proposé dans le cadre de l'invention d'utiliser un label de taille relativement faible, par exemple inférieure ou égale à 4 octets. Cette taille peut varier en fonction des technologies. Le satellite comprend quant à lui des moyens pour faire correspondre un label à une adresse IP de destination et à un port de sortie.

Afin d'expliciter le fonctionnement de la commutation IP sans réassemblage bord, l'exemple d'un paquet IP émis depuis un terminal appelé terminal source vers un autre terminal appelé terminal destination via le satellite est donné ci-après. Ce paquet est fragmenté en plusieurs fragments de niveau 2, soit un premier fragment, des fragments intermédiaires et un dernier fragment. Dans tous les fragments est placé un label identique appelé label de commutation IP, ledit label faisant référence à l'adresse IP de destination. En d'autres termes, une information de niveau 3 est introduite dans l'en-tête du fragment de niveau 2.

La transmission des fragments de niveau 2 du terminal source vers le terminal de destination se passe comme suit.

Pour ce qui est de l'envoi du premier fragment, celui-ci contient entre autre le label de commutation IP ainsi que l'en-tête du paquet IP et éventuellement une partie des données. Il est envoyé par le terminal source vers le satellite. Au passage de ce fragment, le satellite enregistre l'association entre le label de commutation IP et l'adresse IP de destination. Il commute ensuite le fragment vers le terminal destination en utilisant les informations qui lui ont été fournies par le routeur sol comme le numéro de port de sortie.

Il est à noter que la taille minimale du premier fragment sera donnée par l'en-tête de niveau 2 plus l'en-tête de niveau 3, c'est-à-dire l'en-tête IP.

Les fragments intermédiaires sont ensuite envoyés par le terminal source. Au passage des fragments intermédiaires, le satellite lit le label de commutation IP et peut donc en déduire l'adresse IP destination, bien que celle-ci ne soit pas explicitement présente, pour pouvoir commuter correctement ces fragments.

Enfin, au passage du dernier fragment, le satellite commute le fragment et efface l'association entre label et adresse IP de destination qu'il avait enregistrée.

Du point de vue des terminaux, tout s'est passé comme si un routeur IP embarqué avait réassemblé le paquet IP puis routé celui-ci en fonction de l'adresse IP destination.

La figure 5 donne un exemple d'architecture protocolaire de plan de gestion pour un système par satellite utilisant les technologies DVB-S2 et DVB-RCS2.

Le plan de gestion est dédié par exemple au transfert des informations du routeur sol vers le satellite pour sa configuration.

Les entités impliquées sont uniquement le satellite et le routeur sol. Les piles protocolaires du lien montant et descendant entre le routeur sol et le satellite sont illustrées.

L'architecture du plan de gestion est donnée à titre informatif.

Dans la suite de la description un exemple de label de commutation IP est donné. Un exemple de méthode de gestion des labels par les terminaux émetteurs est aussi proposé. Les informations stockées dans le routeur central, c'est-à-dire dans le routeur sol 201 et dans le satellite 202, sont ensuite détaillées. Sont explicités également la manière dont la table de commutation IP du satellite est gérée et comment les paquets sont commutés par le satellite.

Le label de commutation IP de cet exemple a une taille de 1 octet. Ce label est utilisé pour faire référence à l'adresse IP destination. La taille de ce champ d'en-tête supplémentaire est réduite en comparaison d'une adresse IP entière, IPv4 ou IPv6 par exemple. A titre de remarque, cette longueur de 1 octet est suffisante car le nombre maximum de paquet IP qui peuvent être fragmentés en parallèle par un terminal est de 8. Cette limitation est du à longueur de 3 bits du champ d'identification du fragment (champ Frag_ID) de niveau 2 du DVB-RCS2.

Afin d'éviter une signalisation complexe entre les terminaux, un label correspond par exemple à une variable locale propre à chaque terminal. Deux terminaux pourront donc utiliser le même label à un même instant pour faire référence à deux adresses IP destinations distinctes. Pour pouvoir déduire l'adresse IP destination d'un fragment de niveau 2, le satellite devra lire le label et l'adresse source de niveau 2.

En considérant le protocole de niveau 2 du DVB-RCS2, le label est alors placé dans le champ fragment_label des fragments du DVB-RCS2. Ce champ correspond à l'adressage de niveau 2. On aura donc ici une partie de l'en-tête de niveau 2, c'est-à-dire le champ dédié normalement à l'adressage de niveau 2, qui fera en fait référence à une information de niveau 3. Cette information de niveau 3 à laquelle il est fait référence est l'dresse IP de destination. On peut remarquer que cette mise en oeuvre va à l'encontre des principes énoncés grâce au modèle de référence OSI. Cet écart par rapport au modèle de référence permet de faire de la commutation sur des éléments de niveau 2 avec une information de niveau 3.

Le routeur sol 201 n'est pas directement impliqué dans les mécanismes permettant de faire la commutation IP bord sans réassemblage. Cependant c'est lui qui configure le satellite 202 qui est en charge de la commutation IP. Les informations relatives au routage IP et à la commutation IP sont, par exemple, stockées dans le routeur sol sous forme de tables.

Dans un mode de réalisation préféré, le routeur sol aura en mémoire deux tables. Une première table est dite ARP, acronyme venant de l'expression anglo-saxonne « Address Resolution Protocol » et une table de routage.

La table ARP permet de faire les correspondances entre adresses de niveau 2 et adresses de niveau 3.

La table de routage est remplie par le protocole de routage utilisé sur le segment satellite. Elle contient par exemple 4 informations habituelles
- l'adresse IP destination correspondant à par exemple à une adresse de machine ou à une adresse de réseau ;
- un masque si il s'agit d'une adresse de réseau ;
- la passerelle (c'est-à-dire l'adresse IP du prochain routeur à joindre pour atteindre la destination) ;
- le port de sortie, par exemple un numéro de spot dans le contexte des systèmes par satellites.

Le satellite peut avoir en mémoire les deux tables. La première table est appelée table de routage satellite et la seconde table est appelée table de commutation IP.

La table de routage du satellite correspond par exemple à une fusion des deux tables du routeur sol, soit la table de routage et la table ARP. Pour faire la commutation IP, le satellite n'aura pas besoin de toutes les informations comprises dans la table de routage stockée dans le routeur sol. La table de routage du satellite contiendra l'adresse IP destination, le masque s'il s'agit d'une adresse réseau, le numéro du port de sortie associé et l'adresse de niveau 2 de la passerelle. Cette table est remplie et mise à jour en fonction des informations envoyées par le routeur sol.

La table de commutation IP contient par exemple quatre types d'informations :
- une adresse source de niveau 2 ;
- le label de commutation IP ;
- l'adresse destination de niveau 2 ;
- le numéro du port de sortie ;

Un couple d'information [adresse source de niveau 2, label de commutation IP] constitue un couple d'entrée de la table permettant de trouver un couple de sortie [l'adresse destination de niveau 2, numéro du port de sortie].

Lorsqu'un satellite devra commuter un fragment de niveau 2, il lira dans son en-tête l'adresse source de niveau 2 du fragment ainsi que le label puis consultera sa table de commutation IP pour pouvoir commuter le paquet IP sur le bon port de sortie et avec la bonne adresse destination de niveau 2.

L'implémentation de ces tables peut être optimisée pour minimiser l'espace mémoire nécessaire en évitant les redondances d'informations, en particulier pour ce qui est des adresses destination de niveau 2 et des numéros de port de sortie.

Comme explicité précédemment, les labels peuvent être gérés indépendamment d'un terminal à l'autre. Cela permet d'éviter la mise en oeuvre d'un mécanisme de synchronisation entre les terminaux et donc d'éviter une signalisation supplémentaire.

Par ailleurs tout routeur IP doit en théorie décrémenter le champ TTL présent dans l'adresse IP dans le but d'éviter qu'un paquet perdu ne boucle indéfiniment. Il est donc possible que le satellite décrémente le champ TTL lors du passage du premier fragment d'un paquet IP qui contient la totalité de l'en-tête IP. Le satellite devra alors mettre à jours le total de contrôle de l'entête, désigné habituellement par le mot anglais « checksum », ce qui est simple car seul le champ TTL a été décrémenté.

## Revendications

1. Système de télécommunication comprenant au moins un routeur central (100), un terminal source (401) et un terminal destination (402),
le terminal source (401) comprenant des moyens pour transmettre via le routeur central (100) des paquets IP fragmentés en au moins un fragment de niveau 2 vers le terminal de destination (402) auquel est alloué une adresse IP de destination,
ledit routeur central (100) étant composé d'un satellite (202, 301, 400) et d'un routeur sol (201, 300),
ledit satellite (202, 301, 400) comportant des moyens pour mettre en oeuvre une commutation des paquets IP sans réassembler les fragments de niveau 2 émis par le terminal source (401) vers le terminal de destination (402), lesdits fragments comprenant une référence à l'adresse IP de destination utilisée comme base pour la commutation,
le système de télécommunication étant **caractérisé en ce que**
la référence à l'adresse IP de destination est un label de référence, appelé label de commutation IP, ajouté à l'en-tête des fragments de niveau 2 par le terminal source.

2. Système de télécommunication selon la revendication 1 dans lequel la taille du premier fragment de niveau 2 d'un paquet IP après fragmentation est au moins égale à la taille l'en-tête de niveau 2 additionnée à la taille de l'en-tête IP.

3. Système de télécommunication selon la revendication 2 dans lequel le satellite (202, 301, 400) enregistre l'association entre le label de commutation IP et l'adresse IP de destination au passage du premier fragment de niveau 2 d'un paquet IP.

4. Système de télécommunication selon l'une des revendications 1 à 3 dans lequel la taille du label de commutation IP est de 1 octet.

5. Système selon l'une des revendications 1 à 4 dans lequel un label de commutation IP correspond à une variable locale propre à chaque terminal.

6. Système de télécommunication selon l'une des revendications précédentes dans lequel le routeur sol (201, 300) est configuré pour
calculer une table de routage à partir des annonces de route depuis les terminaux vers le routeur central transmises via le satellite, et calculer une table de commutation IP contenant le label de commutation IP pour configurer le satellite dans l'exécution de la commutation IP,
fournir au satellite des informations de commutation de niveau IP contenues dans la table de routage et dans la table de commutation, et
envoyer des informations de routage aux terminaux concernant l'annonce des routes depuis le routeur central vers les terminaux comme si lesdites informations provenaient d'un routeur embarqué sur le satellite.

7. Système de télécommunication selon la revendication 6 dans lequel les informations relatives au routage IP et à la commutation IP sont stockées dans le routeur sol (201, 300) sous forme de tables.

8. Système de télécommunication selon l'une des revendications précédentes dans lequel le satellite comprend une table de routage du satellite, ladite table contenant l'adresse IP destination, un masque lorsqu'il s'agit d'une adresse réseau, le numéro du port de sortie associé et l'adresse de niveau 2 d'une passerelle.

9. Système de télécommunication selon l'une des revendications précédentes dans lequel le satellite décrémente le champ TTL de l'en-tête IP lors du passage du premier fragment de niveau 2.

10. Système selon l'une des revendications précédentes dans lequel les technologies DVB-S2 et DVB-RCS2 sont utilisées.

## Patentansprüche

1. Telekommunikationssystem, das mindestens einen zentralen Router (100), ein Ursprungsendgerät (401) und ein Zielendgerät (402) umfasst,
wobei das Ursprungsendgerät (401) Mittel umfasst, um mittels des zentralen Routers (100) fragmentierte IP-Pakete in mindestens einem Fragment der Stufe 2 zu dem Zielendgerät (402) zu übertragen, dem eine Ziel-IP-Adresse zugewiesen wird,
wobei der zentrale Router (100) aus einem Satelliten (202, 301, 400) und einem Bodenrouter (201, 300) besteht,
wobei der Satellit (202, 301, 400) Mittel aufweist, um ein Switching der IP-Pakete durchzuführen, ohne die durch das Ursprungsendgerät (401) zu dem Zielendgerät (402) ausgesendeten Fragmente der Stufe 2 wieder zusammenzusetzen, wobei die Fragmente einen als Grundlage für das Switching verwendeten Bezug auf die Ziel-IP-Adresse umfassen,
wobei das Telekommunikationssystem **dadurch gekennzeichnet ist, dass**
der Bezug auf die Ziel-IP-Adresse ein Bezugslabel ist, genannt IP-Switchinglabel, der dem Header der Fragmente der Stufe 2 durch das Ursprungsendgerät hinzugefügt wird.

2. Telekommunikationssystem nach Anspruch 1, in dem die Größe des ersten Fragments der Stufe 2 eines IP-Pakets nach der Fragmentierung mindestens gleich der Größe des Headers der Stufe 2 ist, der zu der Größe des IP-Headers addiert wird.

3. Telekommunikationssystem nach Anspruch 2, in dem der Satellit (202, 301, 400) die Verknüpfung zwischen dem IP-Switchinglabel und der Ziel-IP-Adresse beim Durchgang des ersten Fragments der Stufe 2 eines IP-Pakets aufzeichnet.

4. Telekommunikationssystem nach einem der Ansprüche 1 bis 3, in dem die Größe des IP-Switchinglabels 1 Byte beträgt.

5. System nach einem der Ansprüche 1 bis 4, in dem ein IP-Switchinglabel einer örtlichen Variable entspricht, die jedem Endgerät eigen ist.

6. Telekommunikationssystem nach einem der vorhergehenden Ansprüche, in dem der Bodenrouter (201, 300) konfiguriert ist, um
eine Routingtabelle anhand der von den Endgeräten zu dem zentralen Router mittels des Satelliten weitergeleiteten Routenanzeigen zu berechnen, und eine IP-Switchingtabelle zu berechnen, die das IP-Switchinglabel enthält, um den Satelliten in der Ausführung des IP-Switchings zu konfigurieren,
dem Satelliten in der Routingtabelle und in der Switchingtabelle enthaltene Switchinginformationen der IP-Stufe zur Verfügung zu stellen, und
den Endgeräten Routinginformationen bezüglich der Anzeige der Routen von dem zentralen Router zu den Endgeräten zu senden, als ob die Informationen von einem Router an Bord des Satelliten kämen.

7. Telekommunikationssystem nach Anspruch 6, in dem die Informationen im Zusammenhang mit dem IP-Routing und dem IP-Switching in dem Bodenrouter (201, 300) in Form von Tabellen gespeichert werden.

8. Telekommunikationssystem nach einem der vorhergehenden Ansprüche, in dem der Satellit eine Routingtabelle des Satelliten umfasst, wobei die Tabelle die IP-Zieladresse enthält, und eine Maske, wenn es sich um eine Netzwerkadresse, die zugehörige Ausgangsportnummer und die Adresse der Stufe 2 eines Gateways handelt.

9. Telekommunikationssystem nach einem der vorhergehenden Ansprüche, in dem der Satellit das TTL-Feld des IP-Headers beim Durchgang des ersten Fragments der Stufe 2 dekrementiert.

10. System nach einem der vorhergehenden Ansprüche, in dem die Technologien DVB-S2 und DVB-RCS2 verwendet werden.

## Claims

1. Telecommunication system comprising at least one central router (100), a source terminal (401) and a destination terminal (402),
the source terminal (401) comprising means for transmitting via the central router (100) IP packets fragmented into at least one level-2 fragment to the destination terminal (402) to which a destination IP address is allocated,
said central router (100) being composed of a satellite (202, 301, 400) and a ground router (201, 300),
said satellite (202, 301, 400) comprising means for implementing IP packet switching without reassembling the level-2 fragments emitted by the source terminal (401) to the destination terminal (402), said fragments comprising a reference to the destination IP address used as a basis for the switching,
the telecommunication system being **characterised in that**
the reference to the destination IP address is a reference label, called the IP switching label, added to the header of the level-2 fragments by the source terminal.

2. Telecommunication system according to claim 1 in which the size of the first level-2 fragment of an IP packet after fragmentation is at least equal to the size of the level-2 header added to the size of the IP header.

3. Telecommunication system according to claim 2 in which the satellite (202, 301, 400) registers the association between the IP switching label and the destination IP address during the passage of the first level-2 fragment of an IP packet.

4. Telecommunication system according to one of claims 1 to 3 in which the size of the IP switching label is 1 octet.

5. System according to one of claims 1 to 4 in which an IP switching label corresponds to a local variable specific to each terminal.

6. Telecommunication system according to one of the previous claims in which the ground router (201, 300) is configured for
calculating a routing table based on route announcements from the terminals to the central router transmitted via the satellite, and calculating an IP switching table containing the IP switching label for configuring the satellite in the execution of the IP switching,
providing the satellite with IP-level switching information contained in the routing table and in the switching table, and
sending routing information to the terminals concerning the route announcement from the central router to the terminals as if said information originated from a router on board the satellite.

7. Telecommunication system according to claim 6 in which the information relating to IP routing and IP switching is stored in the ground router (201, 300) in the form of tables.

8. Telecommunication system according to one of the previous claims in which the satellite comprises a satellite routing table, said table containing the destination IP address, a mask in the case of a network address, the number of the associated output port and the level-2 address of a gateway.

9. Telecommunication system according to one of the previous claims in which the satellite decrements the TTL field of the IP header during the passage of the first level-2 fragment.

10. System according to one of the previous claims in which DVB-S2 and DVB-RCS2 technologies are used.
